(19) Europäisches Patentamt
European Patent Office
Office européen des brevets

(11) **EP 1 162 475 B1**

(12) **EUROPÄISCHE PATENTSCHRIFT**

(45) Veröffentlichungstag und Bekanntmachung des Hinweises auf die Patenterteilung:
**23.12.2009 Patentblatt 2009/52**

(51) Int Cl.:
*G01S 13/56* (2006.01)   *G01S 7/40* (2006.01)
*G08B 29/04* (2006.01)

(21) Anmeldenummer: **00112465.0**

(22) Anmeldetag: **10.06.2000**

(54) **Bewegungsmelder nach dem Doppler-Prinzip**

Doppler motion detector

Détecteur Doppler de mouvement

(84) Benannte Vertragsstaaten:
**AT BE CH CY DE DK ES FI FR GB GR IE IT LI LU MC NL PT SE**

(43) Veröffentlichungstag der Anmeldung:
**12.12.2001 Patentblatt 2001/50**

(73) Patentinhaber: **SIEMENS AKTIENGESELLSCHAFT 80333 München (DE)**

(72) Erfinder:
• **Siegwart, David**
  **8708 Männedorf (CH)**
• **Hegnauer, Stefan**
  **8634 Hombrechtikon (CH)**

(56) Entgegenhaltungen:
**EP-A1- 0 870 287   WO-A-97/22957**
**DE-C- 4 306 425   US-A- 4 595 924**
**US-A- 4 697 184**

## Beschreibung

Die Erfindung betrifft einen Bewegungsmelder nach dem Doppler-Prinzip, mit einem Mikrowellenmodul zur Aussendung eines Mikrowellensignals in einen Überwachungsraum und zum Empfang der aus diesem reflektierten Strahlung, mit einer an das Mikrowellenmodul angeschlossenen Auswertestufe und mit einer Sabotageüberwachung des Melders.

Derartige Sabotageüberwachungen, die auch als Antimaskeinrichtungen bezeichnet werden und zur Feststellung von Manipulationen am Melder oder in dessen unmittelbarer Nähe, wie beispielsweise Abdecken des Melders durch einen Karton oder eine Folie, dienen, sind zwar bei Passiv Infrarotmeldern weit verbreitet, werden aber bei Mikrowellenmeldern praktisch nicht eingesetzt. Einer der wenigen Mikrowellenmelder mit einer Antimaskeinrichtung ist in der EP-A-0 870 287 beschrieben. Bei diesem Melder durchläuft das vom Mikrowellenmodul empfangene Signal einen zweistufigen Verstärker und wird am Ausgang jeder Verstärkerstufe abgegriffen. Sobald am Ausgang der ersten Verstärkerstufe ein Signal vorliegt, welches die Detektion eines Ereignisses im Nahbereich des Melders anzeigt, wird ein Zeitintervall von einigen Sekunden gestartet. Wenn innerhalb dieses Zeitintervalls keine Detektion eines weiteren Ereignisses erfolgt, wird ein Sabotagesignal ausgelöst.

Bei dieser Antimaskeinrichtung wird die Entscheidung, ob ein Ereignis in der Nähe des Melders stattgefunden hat und somit eine Manipulation am Melder darstellen könnte, einzig anhand der Amplitude des Empfangssignals getroffen. Da aber die Amplitude nicht nur ein Mass für die Entfernung eines Objekts vom Melder sondern auch für dessen Reflexionsfaktor ist, ist nicht gewährleistet, dass ein Signal, dessen Amplitude einem Ereignis in kurzem Abstand vom Melder entspricht, tatsächlich durch eine Manipulation am Melder und nicht etwa durch ein stark reflektierendes Objekt in grösserer Distanz vom Melder ausgelöst wird.

Durch die Erfindung soll nun ein Bewegungsmelder der eingangs genannten Art angegeben werden, dessen Sabotageüberwachung eindeutig und zuverlässig funktioniert.

Die Erfindung ist durch die Merkmale von Anspruch 1 definiert.

Diese Aufgabe wird erfindungsgemäss dadurch gelöst, dass das Mikrowellenmodul zwei voneinander beabstandete Empfänger enthält, deren Abstand so gewählt ist, dass die in den beiden Empfängern empfangene Strahlung einen Phasenunterschied aufweist, dass bei Detektion eines Objekts dessen Bewegungsrichtung bestimmt wird, und dass für die Sabotageüberwachung eine Analyse des Verlauf mindestens eines weiteren Parameters des Empfangssignals in Abhängigkeit von der Bewegungsrichtung erfolgt.

Der erfindungsgemässe Bewegungsmelders ist dadurch gekennzeichnet, dass die genannte Analyse durch Vergleich des mindestens einen weiteren Parameters mit einem vorgegebenen Ereignisablauf erfolgt.

Der erfindungsgemässe Bewegungsmelder verfügt über eine Sabotageüberwachung, bei der ausgehend von der Bewegungsrichtung eines detektierten Objekts weitere Signalparameter daraufhin untersucht werden, ob ihr Wert und/oder ihr Verlauf für eine Abdeckung des Melders (Maskierung) typisch sind. Diese Sabotageüberwachung hat den Vorteil, dass sie vom Material des reflektierenden Objekts unabhängig ist. Ausserdem benötigt sie keine zusätzlichen Schaltungselemente und erfolgt ausschliesslich im Rahmen der Auswertung des Empfangssignals.

Der erfindungsgemässe Bewegungsmelders ist dadurch gekennzeichnet, dass die Bestimmung der Bewegungsrichtung anhand des Vorzeichens des Phasenunterschieds zwischen den Empfangssignalen der beiden Empfänger erfolgt, und dass das Mikrowellenmodul und die Auswertestufe Teil eines ersten Detektors eines Dualmelders bilden, welcher ausserdem einen zweiten Detektor, vorzugsweise einen Passiv-Infrarotdetektor, enthält, und dass die Signale des ersten und diejenigen des zweiten Detektors einer gemeinsamen Analysestufe zugeführt sind, in welcher eine Verknüpfung der genannten Signale erfolgt.

Eine erste bevorzugte Ausführungsform ist dadurch gekennzeichnet, dass der mindestens eine weitere Parameter durch das Ruhesignal des empfangenen Signals gebildet ist, und dass die Änderung des Ruhesignals analysiert wird.

Eine zweite bevorzugte Ausführungsform des erfindungsgemässen Bewegungsmelders ist dadurch gekennzeichnet, dass der mindestens eine weitere Parameter durch die Distanz der detektierten Objekte im Nahbereich gebildet ist.

Eine dritte bevorzugte Ausführungsform des erfindungsgemässen Bewegungsmelders ist dadurch gekennzeichnet, dass der mindestens eine weitere Parameter durch die Amplitude des empfangenen Signals gebildet ist.

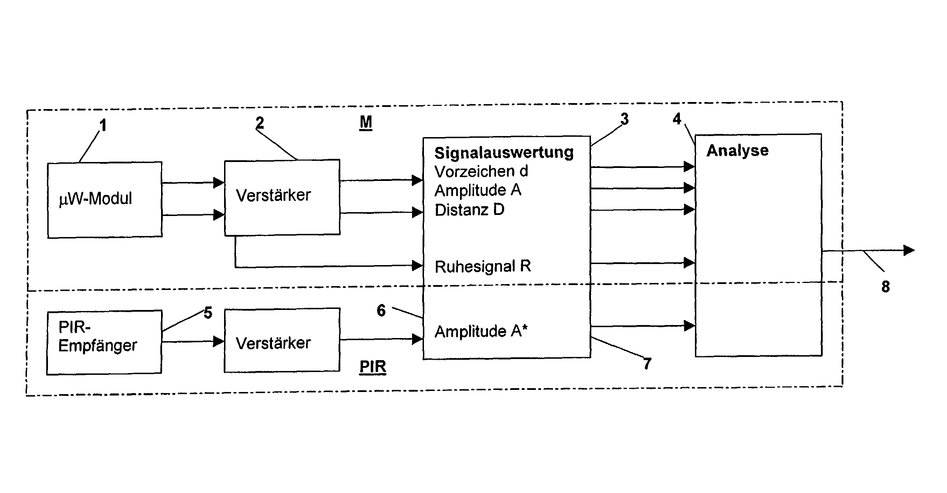

Im folgenden wird die Erfindung anhand eines in der einzigen Zeichnung dargestellten Ausführungsbeispiels näher erläutert. Dieses zeigt ein Blockschema eines erfindungsgemässen Mikrowellenmelders und von dessen Signalauswertung für die Sabotageüberwachung. Der Mikrowellenmelder kann mit einem Passiv-Infrarotmelder zu einem Dualmelder kombiniert sein.

Der mit dem Bezugszeichen M bezeichnete Mikrowellenmelder enthält ein Mikrowellenmodul 1 zur Aussendung und zum Empfang von Mikrowellen, einen dem Mikrowellenmodul 1 nachgeschalteten Verstärker 2, eine Auswertestufe 3 und eine Analysestufe 4, an deren Ausgang ein Sabotagesignal erhältlich ist. Bei Detektion eines Eindringlings liefert der Mikrowellenmelder selbstverständlich ein Alarmsignal, dessen Gewinnung aber nicht Gegenstand der vorliegenden Erfindung bildet und daher auch hier nicht beschrieben wird. Es wird in diesem Zusammenhang auf die US-A-4 697 184, die EP-A-0 870 287 und die europäische Patentanmeldung 99 112 885.1 der Anmelderin der vorliegenden Patentanmeldung verwiesen.

Das Mikrowellenmodul 1 enthält einen Sender und zwei voneinander beabstandete Empfänger, die so positioniert sind, dass die von ihnen empfangene reflektierte Strahlung einen Phasenunterschied $\varphi$ aufweist, der vorzugsweise 90° ($\pi/2$) beträgt. In beiden Empfängern wird das Empfangssignal gemischt (tiefpassgefiltert) und man erhält zwei Signale mit einem bestimmten Phasenunterschied, welcher im Ruhezustand, in dem keine von einem sich bewegenden Objekt im Überwachungsraum reflektierte Strahlung empfangen wird, einen statischen Gleichstrompegel aufweist. Mit dem Ausdruck Objekt ist ein vom Melder M detektierbares Objekt gemeint. Wenn sich jedoch im Überwachungsraum ein Objekt bewegt, dann ändert sich das Signal, wobei das Vorzeichen der Änderung die Bewegungsrichtung angibt. Das Vorzeichen d kann beispielsweise durch Differenzieren der Phasendifferenzen aufeinanderfolgender Messungen gewonnen werden. Dabei bedeutet ein negatives $d\varphi/dt$ eine Bewegung auf das Mikrowellenmodul 1 zu und ein positives $d\varphi/dt$ eine Bewegung von diesem weg.

Die Summe aller empfangenen Signale wird als Ruhesignal bezeichnet. Diese Summe der empfangenen Signale wird relativ gering verstärkt, so dass das Ruhesignal nur von Objekten im Nahbereich deutlich erkennbar beeinflusst wird. Somit kann durch eine Überwachung des Ruhesignals auf Änderungen das Eindringen eines Objekts in den sowie das Verweilen des Objekts im Nahbereich des Melders festgestellt werden. Die ein ungefähres Mass für die Distanz D eines Objekts vom Melder darstellende Amplitude oder Signalstärke A des Empfangssignals, die in beiden Empfängern annähernd gleich gross ist, ergibt sich direkt durch Integrieren der Beträge der Signale.

Für eine genaue Bestimmung der Distanz kann man das Mikrowellenmodul 1 so modifizieren, dass sein Sender zwei verschiedene Frequenzen aussendet, welche beim Empfang erste und zweite Dopplersignale mit einem der Entfernung des Objekts proportionalen Phasenunterschied aufweisen. Ein solches Mikrowellenmodul ist in der europäischen Patentanmeldung 99 112 885.1 beschrieben, auf die hiermit ausdrücklich Bezug genommen wird. In dieser Patentanmeldung ist beschrieben, dass bei Verwendung von zwei oder mehr fixen Sendefrequenzen in einem Doppler-Radar, die entsprechenden Dopplersignale am Ausgang des Empfangsmischers zueinander eine definierte Phasenbeziehung haben. Im Fall von zwei fixen Frequenzen (Diplex) $f_1$ und $f_2$ mit einem Frequenzunterschied $\Delta\omega$ ergibt sich der Phasenunterschied $\Delta\varphi$ am Ausgang des Empfangsmischers zu

$$\Delta\varphi \cong (2\Delta\omega/c)r$$

wobei c die Lichtgeschwindigkeit und r die gesuchte Distanz vom Melder zu dem die Mikrowellenstrahlung reflektierenden Objekt ist. Diese Gleichung gilt unverändert auch für den Fall von mehreren fixen Frequenzen (Multiplex).

Die Auswertestufe 3 liefert somit die folgenden Parameter:

- Das Vorzeichen d der Phasendifferenz, welches die Richtung der Bewegung eines Objekts angibt. Ein Vergleich des Vorzeichens mit der Amplitude A liefert eine Aussage, wie sich die Signalstärke bei Bewegung eines Objekts auf den Melder zu und von diesem weg ändert.
- Denn wenn die Signalstärke bei einem sich entfernenden Objekt gross ist, kann der Melder nicht abgedeckt worden sein.
- Ruhesignal R: Dieses ändert sich nur dann, wenn ein Objekt in den Nahbereich des Melders kommt und es wird so lange geändert bleiben, als sich das Objekt im Nahbereich des Melders befindet.
- Distanz D: Ermöglicht eine Abschätzung, ob sich ein Objekt so nahe vor dem Melder befindet, dass es sich um eine Abdeckung handeln könnte.
- Amplitude A: Signalstärke.

Wenn der Mikrowellenmelder M Teil eines Dualmelders bildet, dann ist zusätzlich ein Passiv-Infrarotmelder PIR mit einem Infrarotempfänger 5, einem diesem nachgeschalteten Verstärker 6 und einer Auswertestufe 7 vorgesehen. Die letztere ist vorzugsweise mit der Auswertestufe 3 des Mikrowellenmelders M zu einer gemeinsamen Signalauswertung zusammengefasst. Das Ergebnis der Auswertestufe 7 ist der Analysestufe 4 zugeführt, welche einen Ausgang 8 aufweist, an welchem ein eventueller Sabotage- oder Abdeckalarm abgegeben wird. Der Passiv-Infrarotmelder PIR wird als bekannt vorausgesetzt und wird daher hier nicht näher beschrieben. Es wird in diesem Zusammenhang beispielsweise auf die EP-A-0 646 901, die EP-A-0 303 913 und die EP-A-0 707 294 verwiesen. In der Auswertestufe 7 wird insbesondere die Amplitude A* und eventuell auch die Dauer des Infrarotsignals ausgewertet.

Der Passiv-Infrarotmelder PIR kann ebenfalls eine Antimaskeinrichtung aufweisen. Diese bildet nicht Gegenstand der vorliegenden Erfindung und ist daher hier nicht näher beschrieben. Es wird in diesem Zusammenhang auf die europäische Patentanmeldung 99 110 848.1 und auf die EP-A-0 476 397 verwiesen. Wenn aus dem Mikrowellensignal die Distanz D bestimmt wird, kann auf die Antimask-Einrichtung des Passiv-Infrarotmelders PIR verzichtet werden, weil die gemeinsame Analyse von D und der Amplitude A* des Infrarotsignals einen eindeutigen Schluss ermöglicht, ob eine Abdeckung des Passiv-Infrarotmelders vorliegt.

Der Passiv-Infrarotmelder PIR reagiert auf die Körperstrahlung eines Menschen im infraroten Spektralbereich und der Mikrowellenmelder M auf die durch den Doppler-Effekt verursachte Frequenzverschiebung der von einem sich bewegenden Eindringling reflektierten Mikrowellenstrahlung. Durch Kombination der beiden Prinzipien lässt sich das unerwünschte Eindringen einer Person in den geschützten Raum mit grösserer Sicherheit und Selektivität erkennen als bei Verwendung nur eines der beiden Detektionsverfahren. Auf diese Weise kann eine fehlerhafte Alarmabgabe mit grösserer Sicherheit vermieden werden.

Die nachfolgenden Tabellen zeigen Beispiele für die Analyse der verschiedenen Signalparameter in der Analysestufe 4. Die Signalparameter sind in den Zeilen der Tabellen jeweils in ihrem Zeitverlauf eingetragen; in der letzten Zeile jeder Tabelle ist angegeben, bei welcher Konstellation der Signalparameter eine Abdeckmeldung abgegeben wird.

Für die einzelnen Parameter sind die folgenden Werte eingetragen:

d: "+" für positiv und "-" für negativ.
R: "k" für Ruhesignal ist konstant, "v" für Ruhesignal ändert sich, "g" für Ruhesignal bleibt geändert.
A: "A" kleine bis "AAAA" grosse Amplitude.
A*: "A*" kleine bis "AAAA*" grosse Amplitude.
D: Entfernung des reflektierenden Objekts vom Melder in Centimetern.

Abdeckung: "J" für Abdeckung und "N" für keine Abdeckung.

Tabelle 1

| M | | | | | | |
|---|---|---|---|---|---|---|
| d | + | + | + | - | - | - |
| A | AA | AAA | AAAA | AA | A | A |
| Abdeckung | N | N | N | N | N | J |
| Zeit t → | | | | | | |

Aus Tabelle 1 ist ersichtlich, dass die Signalstärke A bei einer Bewegung des Objekts zum Melder hin zu- und bei einer Bewegung vom Melder weg, abnimmt, wobei die zeitliche Abnahme stärker ist als die zeitliche Zunahme. Das deutet auf eine Abdeckung hin.

Tabelle 2

| M | | | | | | | |
|---|---|---|---|---|---|---|---|
| d | + | + | + | + | - | - | - | - |
| A | AA | AAA | AAAA | A | A | AAAA | AAA | AA |
| Abdeckung | N | N | N | N | N | N | N | N |
| Zeit t → | | | | | | | |

Tabelle 2 zeigt den Verlauf der Parameter d und A für den Fall, dass keine Abdeckung erfolgt: Die Signalstärke ist bei der Bewegung des Objekts auf den Melder zu gross, ist während des Verweilens des Objekts vor dem Melder klein und anschliessend bei der Bewegung vom Melder weg wieder gross.

Tabelle 3

| M | | | | | | | | | | | | |
|---|---|---|---|---|---|---|---|---|---|---|---|---|
| d | + | + | + | + | - | - | - | - | - | - | - | - |
| R | k | k | v | k | k | k | k | k | v | v | g | g |
| A | AA | AAA | AAAA | A | A | AAA | AAA | AAA | AAAA | AA | AA | A |

(fortgesetzt)

| M | | | | | | | | | | | | |
|---|---|---|---|---|---|---|---|---|---|---|---|---|
| Abdeckung | N | N | N | N | N | N | N | N | N | J | J | J |
| Zeit t → | | | | | | | | | | | | |

Tabelle 3 zeigt den zeitlichen Verlauf der Parameter d, R und A. Während der Bewegung des Objekts zum Melder hin steigt die Signalstärke an. Das Ruhesignal bleibt zuerst konstant, ändert sich dann wenig und bleibt bis zur ersten Phase der Wegbewegung vom Melder konstant. Nach einer neuerlichen Änderung bei noch grosser Signalstärke ergibt sich eine bleibende Änderung des Ruhesignals, die auf eine Abdeckung hinweist.

Tabelle 4

| M | | | | | | |
|---|---|---|---|---|---|---|
| d | + | + | + | - | - | - |
| A | AA | AAA | AAAA | AAA | AA | A |
| D [cm] | 200 | 100 | 10 | 100 | 200 | 400 |
| Abdeckung | N | N | N | J | J | J |
| Zeit t → | | | | | | |

Bei der Analyse gemäss Tabelle 4 erfolgt die Auslösung des Abdeckalarms praktisch ausschliesslich aufgrund der Distanz D, während die Signalstärke A von untergeordneter Bedeutung ist. Der Abdeckalarm wird ausgelöst, wenn sich das Objekt dem Melder bis auf eine bestimmte Minimaldistanz von beispielsweise 20 cm genähert hat.

Tabelle 5

| M | | | | | | |
|---|---|---|---|---|---|---|
| d | + | + | + | - | - | - |
| A | AA | AAA | AAAA | AA | AA | A |
| D [cm] | 200 | 100 | 30 | 100 | 200 | 400 |
| Abdeckung | N | N | N | N | N | N |
| Zeit t → | | | | | | |

Wenn so wie in Tabelle 5 das Objekt nicht näher als beispielsweise 20 cm an den Melder herankommt, wird kein Abdeckalarm ausgegeben, auch dann nicht, wenn das Signalstärkekriterium tendenziell eine Abdeckung vermuten lässt.

Tabelle 6

| M | | | | | | |
|---|---|---|---|---|---|---|
| d | + | + | + | - | - | - |
| A | AA | AAA | AAAA | AA | A | A |
| **PIR** | | | | | | |
| A* | AA* | AAA* | AAAA* | A* | A* | A* |
| Abdeckung | N | N | N | N | N | J |
| Zeit t → | | | | | | |

Beim Beispiel von Tabelle 6 wird ein Abdeckalarm ausgegeben, weil nach einem grossen Mikrowellen- und einem grossen Infrarotsignal bei der Bewegung des Objekts vom Melder weg das Infrarotsignal plötzlich sehr klein ist.
Das Beispiel der folgenden Tabelle 7 ist ähnlich wie das von Tabelle 4; der Unterschied zwischen den beiden Tabellen besteht in der Auswertung des Infrarotsignals in Tabelle 7. Im Unterschied zu Tabelle 4, wo eine Abdeckmeldung ausgegeben wird, weil ein Objekt näher als 20 cm am Melder war, erfolgt in Tabelle 7 kein Abdeckalarm, weil nach der Annäherung auf unter 20 cm das Infrarotsignal normal vorhanden ist.

Tabelle 7

| M | | | | | | |
|---|---|---|---|---|---|---|
| d | + | + | + | - | - | - |
| A | AA | AAA | AAAA | AAA | AA | A |
| D [cm] | 200 | 100 | 10 | 100 | 200 | 400 |
| PIR | | | | | | |
| A* | AA* | AAA* | AAAA* | AAA* | AA* | A* |
| Abdeckung | N | N | N | N | N | N |
| Zeit t → | | | | | | |

**Patentansprüche**

1. Bewegungsmelder nach dem Doppler-Prinzip, mit einem Mikrowellenmodul (1) zur Aussendung eines Mikrowellensignals in einen Überwachungsraum und zum Empfang der aus diesem reflektierten Strahlung, mit einer an das Mikrowellenmadul (1) angeschlossenen Auswertestufe (3) und mit einer Sabotageüberwachung des Melders, **dadurch gekennzeichnet, dass** das Mikrowellenmodul (1) zwei voneinander beabstandete Empfänger enthält, deren Abstand so gewählt ist, dass die in den beiden Empfängern empfangene Strahlung einen Phasenunterschied aufweist, dass bei Detektion eines Objekts dessen Bewegungsrichtung bestimmt wird, und dass für die Sabotageüberwachung eine Analyse (4) des Verlauf mindestens eines weiteren Parameters des Empfangssignals in Abhängigkeit von der Bewegungsrichtung erfolgt, wobei die Analyse (4) durch Vergleich des mindestens einen weiteren Parameters mit einem vorgegebenen Ereignisablauf erfolgt und dass die Bestimmung der Bewegungsrichtung anhand des Vorzeichens (d) des Phasenunterschieds zwischen den Empfangssignalen der beiden Empfänger erfolgt und dass das Mikrowellenmodul (1) und die Auswertestufe (3) Teil eines ersten Detektors (M) eines Dualmelders bilden, welcher ausserdem einen zweiten Detektor, vorzugsweise einen Passiv-Infrarotdetektor (PIR), enthält, und dass die Signale des ersten und diejenigen des zweiten Detektors (M bzw. PIR) einer gemeinsamen Analysestufe (4) zugeführt sind, in welcher eine Verknüpfung der genannten Signale erfolgt.

2. Bewegungsmelder nach Anspruch 1, **dadurch gekennzeichnet, dass** der mindestens eine weitere Parameter durch das Ruhesignal (R) des empfangenen Signals gebildet ist, und dass die Änderung des Ruhesignals (R) analysiert wird.

3. Bewegungsmelder nach Anspruch 1, **dadurch gekennzeichnet, dass** das Ruhesignal (R) der Summe aller empfangenen Signale entspricht.

4. Bewegungsmelder nach einem der Ansprüche 1 bis 3, **dadurch gekennzeichnet, dass** der mindestens eine weitere Parameter durch die Distanz (D) der detektierten Objekte im Nahbereich gebildet ist.

5. Bewegungsmelder nach Anspruch 4, **dadurch gekennzeichnet, dass** für die Bestimmung der Distanz (D) das Mikrowellenmodul (1) so ausgebildet ist, dass es mindestens zwei verschiedene Frequenzen aussendet, welche in den Empfängern erste und zweite Dopplersignale mit einem der Distanz (D) eines Objekts proportionalen Phasenunterschied aufweisen.

6. Bewegungsmelder nach einem der Ansprüche 1 bis 5, **dadurch gekennzeichnet, dass** der mindestens eine weitere Parameter durch die Amplitude (A) des empfangenen Signals gebildet ist.

**Claims**

1. Motion detector based on the Doppler principle comprising a microwave module (1) for emitting a microwave signal into a room under surveillance and for receiving the radiation reflected from the latter, comprising an evaluation stage (3) connected to the microwave module (1) and comprising a sabotage surveillance of the detector, **characterised in that**
the microwave module (1) contains two receivers at a distance from one another, the distance of which is selected such that the radiation received in both receivers has a phase difference, that when detecting an object, the motion direction thereof is determined and that for the sabotage surveillance an analysis (4) of the course of at least one additional parameter of the received signal takes place as a function of the motion direction, with the analysis (4) taking place by comparing the at least one additional parameter with a predetermined course of events and that the determination of the motion direction takes place on the basis of the sign (d) of the phase difference between the received signals of the two receivers and that the microwave module (1) and the evaluation stage (3) form part of a first detector (M) of a dual detector, which also contains a second detector, preferably a passive infrared detector (PIR) and that the signals of the first and those of the second detector (M and/or PIR) are fed to a common analysis stage (4) in which a linking of the said signals takes place.

**2.** Motion detector according to claim 1, **characterised in that** the at least one additional parameter is formed by the resting signal (R) of the received signal and that the change in the resting signal (R) is analysed.

**3.** Motion detector according to claim 1, **characterised in that** the resting signal (R) corresponds to the sum of all received signals.

**4.** Motion detector according to one of claims 1 to 3, **characterised in that** the at least one additional parameter is formed by the distance (D) of the detected objects in the close-up range.

**5.** Motion detector according to claim 4, **characterised in that** for the determination of the distance (D), the microwave module (1) is embodied such that it emits at least two different frequencies, which, in the receivers, have first and second Doppler signals with a phase difference which is proportional to the distance (D) of an object.

**6.** Motion detector according to one of claims 1 to 5, **characterised in that** the at least one additional parameter is formed by the amplitude (A) of the received signal.

**Revendications**

**1.** Détecteur de mouvement fonctionnant selon le principe Doppler, comprenant un module à micro-ondes (1) pour l'émission d'un signal micro-ondes dans un espace de surveillance et pour la réception du rayonnement réfléchi depuis celui-ci, comprenant un étage d'analyse (3) connecté au module à micro-ondes (1) et une surveillance anti-sabotage du détecteur, **caractérisé en ce que** le module à micro-ondes (1) contient deux récepteurs situés à une distance l'un de l'autre et dont l'espacement est choisi de manière à ce que le rayonnement reçu dans les deux récepteurs présente un déphasage, **en ce que**, lors de la détection d'un objet, son sens de déplacement soit déterminé et **en ce qu'**une analyse (4) de l'évolution d'au moins un paramètre supplémentaire du signal de réception en fonction du sens de déplacement soit effectuée pour la surveillance anti-sabotage, l'analyse (4) s'effectuant en comparant le au moins un paramètre supplémentaire à un déroulement d'un événement prédéfini, et **en ce que** la détermination du sens de déplacement soit effectuée sur la base du signe (d) du déphasage entre les signaux de réception des deux récepteurs et **en ce que** le module à micro-ondes (1) et l'étage d'analyse (3) forment une partie d'un premier détecteur (M) d'un détecteur double qui contient, en outre, un second détecteur, de préférence un détecteur à infrarouge passif (PIR), et **en ce que** les signaux du premier détecteur et ceux du second détecteur (M resp. PIR) sont amenés à un étage d'analyse commun (4) dans lequel une combinaison des signaux mentionnés a lieu.

**2.** Détecteur de mouvement selon la revendication 1, **caractérisé en ce que** le au moins un paramètre supplémentaire est formé par le signal de fond (R) du signal reçu et **en ce que** la modification du signal de fond (R) est analysée.

**3.** Détecteur de mouvement selon la revendication 1, **caractérisé en ce que** le signal de fond (R) correspond à la somme de tous les signaux reçus.

**4.** Détecteur de mouvement selon l'une des revendications 1 à 3, **caractérisé en ce que** le au moins un paramètre supplémentaire est formé par la distance (D) des objets détectés à courte distance.

**5.** Détecteur de mouvement selon la revendication 4, **caractérisé en ce que**, pour la détermination de la distance (D), le module à micro-ondes (1) est exécuté de manière à émettre au moins deux fréquences différentes qui présentent, dans les récepteurs, un premier et un second signaux Doppler ayant un déphasage proportionnel à la distance (D) d'un objet.

**6.** Détecteur de mouvement selon l'une des revendications 1 à 5, **caractérisé en ce que** le au moins un paramètre supplémentaire est formé par l'amplitude (A) du signal reçu.

EP 1 162 475 B1

**M**

| 1 | 2 | 3 | 4 |

```
μW-Modul  →  Verstärker  →  Signalauswertung      →  Analyse
                              Vorzeichen d
                              Amplitude A
                              Distanz D

                              Ruhesignal R
```

**PIR**

```
PIR-        →  Verstärker  →  Amplitude A*
Empfänger
```

5   6   7   8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0870287 A
- US 4697184 A
- EP 99112885 A
- EP 0646901 A
- EP 0303913 A
- EP 0707294 A
- EP 99110848 A
- EP 0476397 A